(19) Europäisches Patentamt
European Patent Office
Office européen des brevets

(11) **EP 3 801 848 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **19728674.3**

(22) Anmeldetag: **04.06.2019**

(51) Internationale Patentklassifikation (IPC):
**B01D 65/10** (2006.01)    **B01D 69/12** (2006.01)
**G01N 15/08** (2006.01)

(52) Gemeinsame Patentklassifikation (CPC):
**B01D 65/10; B01D 69/02; B01D 69/12;**
B01D 2325/022; G01N 15/088

(86) Internationale Anmeldenummer:
**PCT/EP2019/064479**

(87) Internationale Veröffentlichungsnummer:
**WO 2019/234018 (12.12.2019 Gazette 2019/50)**

(54) **SERIELLE ANORDNUNG MIT MEHREREN LAGEN ASYMMETRISCHER FILTERMEDIEN, HERSTELLUNGSVERFAHREN UND VERWENDUNG DER ANORDNUNG**

SERIAL ARRANGEMENT WITH MULTIPLE LAYERS OF ASYMMETRIC FILTER MEDIA, MANUFACTURING METHOD AND USE OF THE ARRANGEMENT

AGENCEMENT EN SÉRIE COMPORTANT UNE PLURALITÉ DE COUCHES DE MILIEUX FILTRANTS ASYMÉTRIQUES, PROCÉDÉ DE FABRICATION ET UTILISATION DE L'AGENCEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2018 DE 102018004521**

(43) Veröffentlichungstag der Anmeldung:
**14.04.2021 Patentblatt 2021/15**

(73) Patentinhaber: **Sartorius Stedim Biotech GmbH**
**37079 Göttingen (DE)**

(72) Erfinder:
• **THOM, Volkmar**
**37079 Goettingen (DE)**
• **HOSCH, Jörg**
**37079 Goettingen (DE)**
• **SCHNEIDER, Benjamin**
**37079 Goettingen (DE)**

(74) Vertreter: **Vigand, Philippe et al**
**Novagraaf International SA**
**Chemin de l'Echo 3**
**1213 Onex - Genève (CH)**

(56) Entgegenhaltungen:
EP-A2- 0 806 475       JP-A- 2016 138 813
US-A1- 2002 175 124    US-A1- 2009 061 205
US-A1- 2010 320 138    US-A1- 2012 275 658
US-A1- 2017 340 793

**Beschreibung**

Die vorliegende Erfindung betrifft eine serielle Anordnung, die n Lagen asymmetrischer Filtermedien umfasst, wobei n mindestens zwei beträgt und die Porengröße der n Lagen in Dickenrichtung der seriellen Anordnung im Wesentlichen kontinuierlich abnimmt, ein Herstellungsverfahren für die serielle Anordnung, eine Filtrationseinheit mit der seriellen Anordnung und die Verwendung der seriellen Anordnung.

Aus dem Stand der Technik bekannt sind Herstellungsverfahren, in denen aus zwei Gießlösungen mit unterschiedlichen Zusammensetzungen integrale asymmetrische Membranen hergestellt werden können. Diese werden üblicherweise als Co-Casting-Verfahren bezeichnet. In diesen werden auf einen bewegten Träger im Wesentlichen simultan zwei oder mehrere Polymer-Gießlösungen mit unterschiedlichen Zusammensetzungen zusammengeführt. Durch einen Phaseninversionsprozess wird dann eine integrale Membran erzeugt. Die erhaltene Membran besteht aus mehreren fest miteinander verbundenen Membranschichten, wobei die Anzahl der Membranschichten der Anzahl der verwendeten Polymer-Gießlösungen entspricht. Mit derartigen Verfahren können integrale asymmetrische Mikrofiltrationsmembranen mit verschiedenen Porengrößenprofilen hergestellt werden. Obwohl zwei oder mehr Gießlösungen verwendet werden, ergibt das Co-Casting-Verfahren eine integrale Mikrofiltrationsmembran, das heißt eine einzige Membran mit fest miteinander verbundenen Membranschichten, die jeweils aus den Gießlösungsschichten gebildet sind.

Die allgemeine Definition der Membranasymmetrie bezieht sich auf das Verhältnis der Porengrößen der gegenüberstehenden Hauptoberflächen der Membran. Die Porengrößen der Hauptoberflächen werden hierbei aus rasterelektronenmikroskopischen Aufnahmen der Hauptoberflächen qualitativ ermittelt. Der Porengrößenverlauf zwischen den Hauptoberflächen wurde unter anderem aufgrund unzureichender Charakterisierungsverfahren bislang nur qualitativ beschrieben. Gemäß dem Stand der Technik wird der Porengrößenverlauf asymmetrischer mikroporöser Membranen beispielsweise durch rasterelektronenmikroskopische Aufnahmen von Membranquerschnitten charakterisiert. Dabei werden beispielsweise Porengrößen- bzw. Porositätsgradienten qualitativ abgeschätzt. Die bekannten Verfahren sind zudem wenig differenzierend und können kleinere Unterschiede zwischen verschiedenen Membranen nicht ausreichend darstellen. Somit konnten bislang Porengrößen- bzw. Porositätsgradienten lediglich qualitativ oder semi-quantitativ bestimmt werden und damit Einflüsse von Herstellungsbedingungen auf Porengrößen- bzw. Porositätsgradienten nur unzureichend untersucht werden.

Neben Co-Casting-Membranen können auch mehrere separate in Reihe geschaltete Filterstufen eine hohe Standzeit erzielen. Allerdings bringt die Reihenschaltung von Filtermedien, deren Porengrößengradienten nicht optimal aufeinander abgestimmt sind, verfahrenstechnische Nachteile (z. B. einen höheren Druckverlust und unzureichende Ausnutzung des Filtervolumens) mit sich und hat daher eine niedrige Effizienz.

DE 37 01 633 A1 offenbart eine mikroporöse Membran, z. B. aus Polyethersulfon, welche eine asymmetrische Porengrößenverteilung entlang ihres Membranquerschnitts aufweist, wobei das Minimum der Porengrößen im Membraninneren durchlaufen wird, welches von den beiden Hauptoberflächen eingeschlossen wird. Die nach dem Fällbadverfahren hergestellte Membran weist eine trichter- oder sanduhrförmige Porengrößenverteilung entlang des Membranquerschnitts auf.

EP 1 118 377 B1 offenbart eine mikroporöse Polysulfonmembran, die nach dem Fällbadverfahren hergestellt wird. Die Membran weist einen isotropen Bereich mit im Wesentlichen konstanter Porengröße auf, welcher sich von einem Punkt innerhalb des Membranquerschnitts zur ersten Hauptoberfläche der Membran erstreckt. Dieser Punkt innerhalb des Membranquerschnitts befindet sich in einem Abstand von 15 bis 50 %, bezogen auf die gesamte Membrandicke, zur ersten Hauptoberfläche der Membran. Benachbart zum isotropen Bereich weist die Membran einen asymmetrischen Bereich auf, in welchem die Porengröße in Richtung der zweiten Hauptoberfläche zunimmt. Es resultiert eine Trichterstruktur der Porengrößenverteilung.

US 7,140,496 B2 offenbart eine Membran mit einer grobporigen, asymmetrischen Schicht, welche die erste Hauptoberfläche einschließt, mindestens 5 µm dick ist und ein höheres Offenporigkeitsverhältnis aufweist als eine angrenzende feinporige, isotrope und mikroporöse Schicht. Die feinporige Schicht macht mindestens 50 % der Gesamtdicke der Membran aus. Das Offenporigkeitsverhältnis der grobporigen Schicht nimmt von der ersten Hauptoberfläche ausgehend in Richtung der feinporigen Schicht kontinuierlich ab, wobei eine Trichterstruktur resultiert.

US 5,906,742 offenbart eine aus Polysulfon und einem hydrophilen Polymer bestehende Mikrofiltrationsmembran mit einer Hautschicht, einer isotropen Region konstanter Porengröße und einer an diese angrenzenden, anisotropen Region mit einer Porengröße, die in Richtung der Hauptoberfläche, welche die anisotrope Region begrenzt, allmählich zunimmt, wodurch eine Trichterstruktur resultiert.

EP 2 623 187 A1 offenbart eine mikroporöse Membran mit zwei Hauptoberflächen, welche das poröse Membraninnere begrenzen. Die Membran weist zwei asymmetrische Regionen auf, wobei die erste asymmetrische Region ausgehend von der ersten Hauptoberfläche in Richtung des Membraninneren Poren mit ansteigendem Durchmesser aufweist und wobei die zweite asymmetrische Region ausgehend von der anderen Hauptoberfläche in Richtung des Membraninneren Poren mit ebenfalls ansteigendem Durchmesser aufweist.

US 8,925,737 B2 offenbart ein Laminat aus zwei Polymerschichten, die sich in ihrer Kristallinität (Anteil von amorphen Bereichen zum Anteil an kristallinen Bereichen in der Ausrichtung aller Polymerketten) unterscheiden. Die erste Polymerschicht weist eine kegelstumpfförmige Porengrößenverteilung mit L1>L2 auf, während die zweite Polymerschicht ebenfalls eine kegelstumpfförmige Porengrößenverteilung mit L3>L4 aufweist, wobei die untere Öffnung L2 des Kegelstumpfs der ersten Polymerschicht größer ist als die obere Öffnung L3 des Kegelstumpfs der zweiten Polymerschicht.

US 2010/320138 A1 offenbart funktionalisierte Vliesgegenstände.

US 2002/175124 A1 beschreibt ein Verfahren zur Virusentfernung und eine Filtrationskapsel, die dafür verwendet werden kann.

US 2009/061205 A1 offenbart einen mikroporösen Film mit einem kristallinen Polymer, ein Herstellungsverfahren desselben und einen Filtrationsfilter.

Der vorliegenden Erfindung liegt die Aufgabe zugrunde, eine serielle Anordnung von Filtermedien zur Filtration bereitzustellen, wobei die serielle Anordnung auf effiziente Weise eine hohe Standzeit bei gleichzeitig hoher Abscheiderate für abzutrennende Komponenten erzielen soll, und ein Herstellungsverfahren für die serielle Anordnung, eine Filtrationseinheit mit der Anordnung und Verwendungen der seriellen Anordnung bereitzustellen.

Diese Aufgabe wird durch die in den Ansprüchen gekennzeichneten Ausführungsformen gelöst.

Erfindungsgemäß wird unter einer "seriellen Anordnung von Filtermedien" eine Abfolge von Filtermedien verstanden, bei welcher mehrere Lagen von asymmetrischen Filtermedien sequentiell hintereinander angeordnet bzw. in Reihe geschaltet sind, wobei die Lagen direkt aneinander angrenzen können oder durch dazwischen eingeschobene Abstandshalter, z. B. poröse Stützstrukturen, voneinander getrennt sein können.

Die erfindungsgemäße serielle Anordnung ist ein Zusammenbau aus n Lagen von asymmetrischen Filtermedien, welche lose übereinandergestapelt sind, und wobei die Randbereiche der Lagen in ein Filtergehäuse eingebettet sind. Erfindungsgemäß sind die Lagen nur in den nicht filteraktiven Randbereichen der Lagen in ein Filtergehäuse eingebettet, damit die filteraktiven Bereiche der Filtermedien zur Filtration zur Verfügung stehen. "Lose übereinandergestapelt" bedeutet, dass die n Lagen nicht direkt miteinander verbunden bzw. aneinandergeheftet sind, sondern ohne feste Verbindung der Lagen untereinander in Reihe angeordnet sind.

Erfindungsgemäß wird unter einer "Lage" ein flächiges Gebilde verstanden. "Flächig" bedeutet, dass das Gebilde (beispielsweise ein Filtermedium, eine Membran, eine serielle Anordnung oder ein Zusammenbau) zwei vorwiegend ebene und weitgehend zueinander parallele gegenüberstehende Hauptoberflächen aufweist. "Hauptoberflächen" sind die Flächen des Gebildes mit dem größten Flächeninhalt.

Der Begriff "mikroporös" bezeichnet Filtermedien bzw. Membranen mit bevorzugten Porengrößen von 0,01 bis 100 $\mu$m.

Die Ausdrücke "Dickenrichtung" und "Richtung der Flächennormalen" bezeichnen die Richtung, welche senkrecht zu den Hauptoberflächen eines flächigen Gebildes (beispielsweise ein Filtermedium, eine Membran, eine serielle Anordnung oder ein Zusammenbau, der Filtermedien umfasst) verläuft. "Flächenrichtungen" verlaufen parallel zu den Hauptoberflächen. Ein "Querschnitt" ist ein Schnitt entlang der Dickenrichtung / in Richtung der Flächennormalen.

Im Allgemeinen versteht man unter einem asymmetrischen Filtermedium ein poröses Filtermedium mit zwei sich gegenüberstehenden Hauptoberflächen, wobei die Poren einer Hauptoberfläche größer sind als die der gegenüberstehenden Hauptoberfläche. Nach dieser Definition gibt der Asymmetriefaktor das Verhältnis der Porengröße auf der grobporigen Oberfläche zu der Porengröße auf der feinporigen Oberfläche an. Bei dem asymmetrischen Filtermedium kann es sich um eine Flach- oder Hohlfasermembran, ein Vlies, ein Gewebe, ein monolithisches Filtermedium oder einen Tiefenfilter handeln. Besonders bevorzugt handelt es sich bei dem asymmetrischen Filtermedium um eine asymmetrische mikroporöse Membran.

Im Allgemeinen versteht man unter einer asymmetrischen mikroporösen Membran einen durchgehend porösen Polymerfilm mit zwei sich gegenüberstehenden Hauptoberflächen, wobei die Poren einer Hauptoberfläche größer sind als die der gegenüberstehenden Hauptoberfläche. Nach dieser allgemeinen Definition gibt der Asymmetriefaktor das Verhältnis der Porengröße auf der großporigen Oberfläche zu der Porengröße auf der feinporigen Oberfläche an.

Gemäß der vorliegenden Erfindung weist ein "asymmetrisches" Filtermedium bzw. eine "asymmetrische" Membran Porengrößen auf, die in der Dickenrichtung variieren (vgl. beispielsweise EP 0 407 800 A2 oder EP 0 345 781 A2). Der "Asymmetriefaktor" ist das Verhältnis der größten Porengröße zu der kleinsten Porengröße von den in Dickenrichtung variierenden Porengrößen. Konkret ist der Asymmetriefaktor erfindungsgemäß wie folgt definiert.

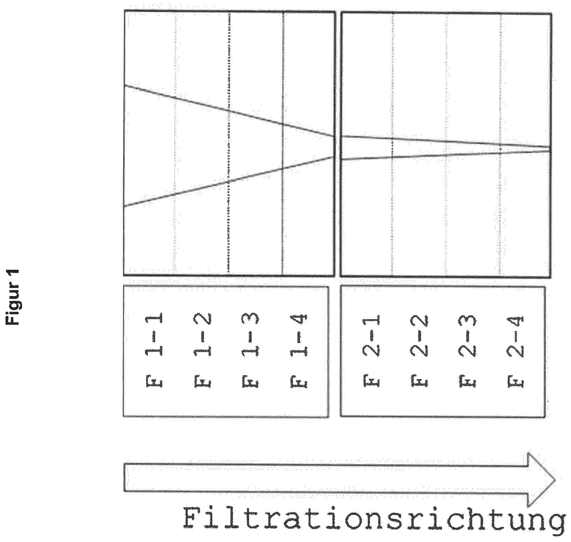

Zur Bestimmung des Asymmetriefaktors wird jede der n Lagen der seriellen Anordnung entlang der Dickenrichtung gedanklich in vier Sektionen unterteilt (siehe die in Figur 1 dargestellte serielle Anordnung mit Lagen F1 und F2 sowie Sektionen F1-1 bis F1-4 beziehungsweise F2-1 bis F2-4). Die vier Sektionen, die einer Lage zugehörig sind, weisen jeweils die gleiche Dicke auf, wobei die Lagen (und demgemäß die Sektionen unterschiedlicher Lagen) unterschiedliche Dicken aufweisen können.

Jede der vier Sektionen einer Lage weist eine mittlere Porengröße auf. Die mittlere Porengröße der Sektionen kann durch das unten beschriebene Charakterisierungsverfahren, das nicht Teil der Erfindung ist, bzw. wie in den nachstehenden Beispielen beschrieben ermittelt werden. Der Asymmetriefaktor einer Lage ist das Verhältnis der größten mittleren Porengröße zu der kleinsten mittleren Porengröße der vier Sektionen einer Lage. Der Gesamtasymmetriefaktor der n Lagen ist das Verhältnis der größten mittleren Porengröße zu der kleinsten mittleren Porengröße der 4n Sektionen.

Im Gegensatz zur allgemeinen Definition der Membranasymmetrie, die lediglich von den Porengrößen der gegenüberstehenden Hauptoberflächen abhängt, fließen erfindungsgemäß die Porengrößen des gesamten Filtermedien- bzw. Membranquerschnitts in die Berechnung des (Gesamt)asymmetriefaktors ein. Hierdurch wird ein weitaus differenzierteres Bild von der Porenstruktur erhalten. Somit können auch kleinere Unterschiede zwischen verschiedenen Filtermedien/Membranen erfasst werden.

Darüber hinaus können auf Grundlage der erfindungsgemäßen Definition des (Gesamt)asymmetriefaktors Porengrößen- bzw. Porositätsgradienten realitätsnah erfasst werden und damit Einflüsse von Herstellungsbedingungen auf Porengrößen- bzw. Porositätsgradienten genau untersucht werden. Dadurch wird es möglich, Filtermedien/Membranen mit definierten Porengrößen- bzw. Porositätsgradienten herzustellen, zu charakterisieren und Porengrößengradienten mit vorteilhaften technischen Wirkungen aufzufinden.

Die vorliegende Erfindung betrifft in einem Aspekt eine serielle Anordnung, die n Lagen umfasst, wobei n mindestens zwei beträgt, jede der n Lagen ein asymmetrisches Filtermedium mit einem Asymmetriefaktor von mindestens 1,5 ist, die n Lagen einen Gesamtasymmetriefaktor von mindestens 10 aufweisen, und die Porengröße der n Lagen in Dickenrichtung der seriellen Anordnung im Wesentlichen kontinuierlich abnimmt.

Dadurch, dass die Porengröße der n Lagen in Dickenrichtung der seriellen Anordnung im Wesentlichen kontinuierlich abnimmt, weist die erfindungsgemäße serielle Anordnung eine Richtung abnehmender Porengrößen in der Dickenrichtung auf, welche nachfolgend als Filtrationsrichtung (Strömungsrichtung) bezeichnet wird (siehe Figur 1). Die der Filtrationsrichtung entgegenstehende Hauptoberfläche ist die anströmseitige Hauptoberfläche, die in Filtrationsrichtung darauf folgende Hauptoberfläche ist die abströmseitige Hauptoberfläche. Sofern notwendig und nicht anders angegeben, werden die n Lagen in Filtrationsrichtung durchgezählt. Das heißt, die erste Lage ist die äußere Lage auf der Anströmseite und die n-te Lage ist die äußere Lage auf der Abströmseite (siehe Figur 1).

Erfindungsgemäß nimmt die Porengröße der n Lagen in Dickenrichtung der seriellen Anordnung im Wesentlichen kontinuierlich ab. Das heißt, dass die n Lagen der seriellen Anordnung einen Verschnitt von höchstens 30 %, vorzugsweise höchstens 20 %, insbesondere bevorzugt höchstens 15 %, noch mehr bevorzugt höchstens 5 % und am meisten bevorzugt 0 % aufweisen.

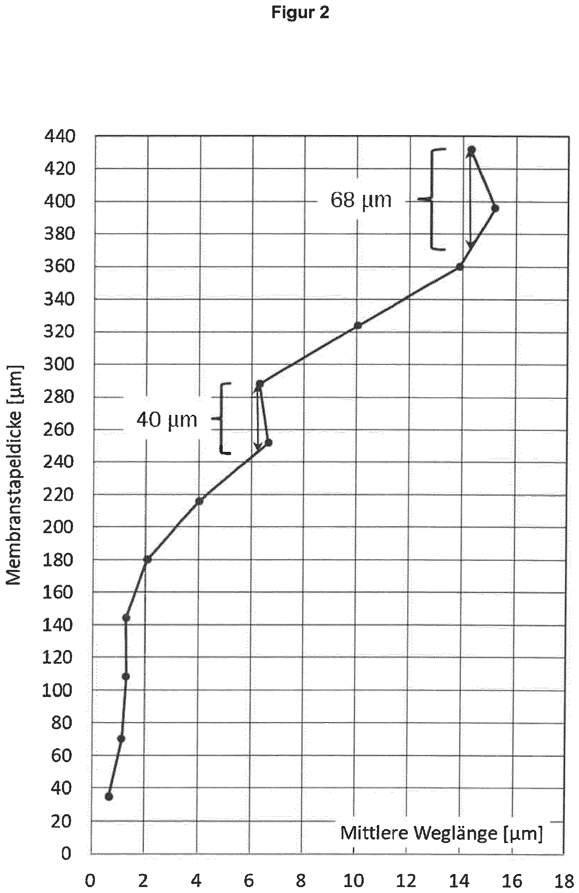

Wenn die mittlere Porengröße einer in Filtrationsrichtung nachgeordneten Sektion größer ist als die mittlere Porengröße der vorgeordneten Sektion, bleibt der Bereich der nachgeordneten Sektion mit größerer Porengröße im Wesentlichen ungenutzt, weil das Medium in der vorgeordneten Lage bereits einen Bereich mit kleinerer Porengröße durchströmt hat. Es liegt ein sogenannter "Verschnitt" oder ein "Totvolumen" vor, der für die Schmutzaufnahme (Aufnahme von zu filtrierenden Komponenten) nur mit eingeschränkter Effizienz zur Verfügung steht (siehe Figur 2).

Verfahren zur Bestimmung des Verschnitts

Wie in Figur 2 beispielhaft dargestellt, werden in einem XY-Diagramm die mittleren Porengrößen der 4n Sektionen (X-Achse, in Figur 2 als "mittlere Weglänge" bezeichnet) gegen die Dicke der n Lagen bzw. Sektionen (Y-Achse) jeweils mit besonders bevorzugt dreistelliger Genauigkeit aufgetragen. Das heißt, in dem XY-Diagramm wird jede mittlere Porengröße dem Ort der zugehörigen Sektion ("Tiefe" der Sektion in den n Lagen) zugeordnet, um ein in Dickenrichtung aufgelöstes Porengrößenprofil der n Lagen / 4n Sektionen zu erhalten. Die mittleren Porengrößen können mit dem Charakterisierungsverfahren bzw. wie in den Beispielen beschrieben bestimmt werden.

Das Porengrößenprofil gibt die mittleren Porengrößen jeder Sektion an. Dabei wird die Porengröße (X-Achse) auf dem Abschnitt der Y-Achse aufgetragen, welcher der Mitte der Sektion in Dickenrichtung entspricht. Dies bedeutet, dass der mittleren Porengröße (X-Wert) der j-ten Sektion (j ist 1, 2, 3 oder 4) aus der n-ten Lage die Dicke aller n-1 vorangegangenen Lagen plus die Dicke aller vorangegangenen Sektionen j-1 plus der halben Dicke der j-ten Sektion als Y-Wert zugeordnet wird. (Hierbei ist grundsätzlich unerheblich, ob die Lagen und Sektionen in oder gegen Filtrationsrichtung durchgezählt werden.) In dem XY-Diagramm werden sodann alle Mittelwerte einander benachbarter Sektionen durch Geraden miteinander verbunden (Verbindungsgeraden).

Sofern festgestellt wird, dass, ausgehend von einer der beiden äußeren Sektionen, eine Abfolge von jeweils zueinander benachbarten Sektionen existiert, worin die mittlere Porengröße zwischen zwei benachbarten Sektionen nicht zunimmt, liegt kein Verschnitt vor. (In diesem Fall nimmt für die Abfolge der Sektionen, die von der anderen der beiden äußeren Sektionen ausgeht, die mittlere Porengröße zwischen zwei benachbarten Sektionen nicht ab.)

Andernfalls, d. h. sofern ein Verschnitt vorliegt, wird für die folgende Analyse diejenige der beiden Abfolgen von jeweils zueinander benachbarten Sektionen herangezogen, welche die geringere Anzahl an zueinander benachbarten Sektionen mit zunehmender mittlerer Porengröße aufweist. Somit beginnt die Analyse von der Anströmseite. Das heißt, die Analyse erfolgt in Filtrationsrichtung. (Demgemäß wird bei der entsprechenden Analyse des in Figur 2 dargestellten Beispiels von oben begonnen, da bei dieser Betrachtung lediglich zwei zueinander benachbarte Sektionen mit zunehmender mittlerer Porengröße vorliegen.)

In anderen Worten wird die Anströmrichtung so gewählt, dass die Porengrößen durchgehend kleiner werden, falls die vollständige Abfolge mittlerer Porengrößen so beschaffen ist, dass die Porengrößen in der Abfolge durchgehend abnehmen oder durchgehend zunehmen. In diesem Fall liegt kein Verschnitt vor. Anderenfalls, d. h. sofern ein Verschnitt vorliegt, wird die Anströmrichtung/Anströmseite so festgelegt, dass der Verschnitt möglichst klein ist.

Ausgehend von jedem Punkt des XY-Diagramms, der einer Sektion entspricht, die eine kleinere mittlerer Porengröße als die benachbarte Folgesektion aufweist, wird parallel zur Y-Achse eine senkrechte Gerade eingezeichnet. Der Abschnitt auf der Y-Achse (Dicke) von dem Punkt, welcher der vorstehenden Sektion mit kleinerer mittlerer Porengröße entspricht, bis zum nächsten Schnittpunkt mit einer Verbindungsgeraden wird als Verschnittbereich berücksichtigt. (In dem Beispiel von Figur 2 sind zwei Verschnittbereiche mit einem jeweiligen Abschnitt auf der Y-Achse (Dicke) von 68 $\mu$m bzw. 40 $\mu$m ausgewiesen.) Die Summe der Dicken aller Verschnittbereiche ist der Gesamtverschnittbereich. (Im Beispiel von Figur 2 sind dies 108 $\mu$m.) Das prozentuale Verhältnis des Gesamtverschnittbereichs zur Gesamtdicke aller 4n Sektionen stellt den Verschnitt dar. (Im Beispiel von Figur 2 sind dies 108 $\mu$m / 396 $\mu$m · 100 % = 27,3 %). Der Wert von 396 $\mu$m ergibt sich hierbei aus der Differenz von dem obersten Graphenpunkt (430 $\mu$m) und dem untersten Graphenpunkt (34 $\mu$m) der Figur 2.

Bei einer Filtration mit der erfindungsgemäßen seriellen Anordnung verläuft die Flussrichtung der zu filtrierenden Flüssigkeit (Filtrationszusammensetzung) in Filtrationsrichtung, also in Richtung abnehmender Porengröße. Durch die im Wesentlichen kontinuierlich abnehmende mittlere Porengröße der n Lagen in Dickenrichtung/Filtrationsrichtung (Trichterstruktur; siehe Figur 1), wird bei der Filtration insbesondere von Filtrationszusammensetzungen, die Teilchen enthalten, das gesamte Filtermedien- bzw. Membranvolumen für den Größenausschluss von in der Filtrationszusammensetzung enthaltenen Teilchen ("Schmutzaufnahme"/Aufnahme zu filtrierender Komponenten) genutzt und die Standzeit ("Aufnahmekapazität für zu filtrierende Komponenten") der erfindungsgemäßen seriellen Anordnung maximiert. Die Standzeit kann wie in den Beispielen angegeben bestimmt werden.

Gemäß einer bevorzugten Ausführungsform der vorliegenden Erfindung nimmt die mittlere Porengröße der 4n Sektionen in Dickenrichtung kontinuierlich ab. Das heißt, die mittlere Porengröße der folgenden Sektion ist vorzugsweise stets kleiner als die Porengröße der vorigen Sektion.

Erfindungsgemäß weist die serielle Anordnung mindestens zwei Lagen auf. Grundsätzlich können sich zwischen den Lagen Einschübe oder Abstandshalter befinden, wobei bevorzugt alle Lagen direkt aneinander angrenzen, ohne dass sich ein Abstand oder Einschub zwischen zwei benachbarten Lagen befindet. Bei den Einschüben oder Abstandshaltern kann es sich um handelsübliche flächige poröse Medien, z. B. Vliese oder Gewebe, handeln.

Gemäß einer bevorzugten Ausführungsform umfasst die serielle Anordnung 2 bis 10 Lagen. Zu berücksichtigen ist, dass "n" eine natürliche Zahl ist. Besonders bevorzugt sind 2 bis 6, insbesondere bevorzugt 2 bis 4, noch mehr bevorzugt 2 oder 3 und am meisten bevorzugt 3 Lagen. Durch eine höhere Anzahl an Lagen und damit eine höhere Gesamtdicke des Verbunds können auf Grund des größeren Volumens des Verbundes prinzipiell mehr Teilchen aufgefangen bzw. abgereichert werden und somit prinzipiell auch höhere Standzeiten erreicht werden. Vorzugsweise besteht die serielle Anordnung aus den n Lagen, wobei n eine natürliche Zahl ist.

Die n Lagen liegen lose übereinander.

Vorzugsweise sind die n Lagen Flach-Filtermedien (flächige Filtermedien), noch bevorzugter Flach-Membranen, insbesondere bevorzugt Flach-Polymermembranen. Polymermembranen sind aus einem Polymer oder Polymergemisch aufgebaut. Geeignete Polymere sind beispielsweise Cellulosederivate wie z. B. Cellulosehydrat, Celluloseester, Cellulosenitrat und Celluloseacetat, aber auch regenerierte Cellulose, Polyamide wie z. B. Nylon und Perlon, Fluorpolymere wie z. B. Polytetrafluorethylen (PTFE) und Polyvinylidendifluorid (PVDF), Olefine wie z. B. Polyethylen und Polypropylen, Polysulfone, wie z. B. Polysulfon, Polyarylsulfon und Polyethersulfon, Polyacrylsäure, Polymethacrylsäure, Acrylsäure-Methacrylsäure-Copolymer sowie deren Gemische und vernetzte Polymere sowie deren Gemische, wobei Polyethersulfon besonders bevorzugt ist.

Gemäß einer bevorzugten Ausführungsform sind die mikroporösen Membranen Flach-membranen oder Hohlfasermembranen.

Für jede Lage ist bevorzugt, dass diejenigen Sektionen, welche den größten bzw. kleinsten mittleren Porendurchmesser aufweisen, die äußeren Sektionen der Lage (erste und vierte Sektion) sind. Für die serielle Anordnung ist bevorzugt, dass die Sektionen der seriellen Anordnung mit dem größten bzw. kleinsten mittleren Porendurchmesser aller 4n Sektionen der seriellen Anordnung die äußeren Sektionen der seriellen Anordnung (erste Sektion der ersten Lage und vierte Sektion der n-ten Lage) sind.

Gemäß einer bevorzugten Ausführungsform der vorliegenden Erfindung nimmt der Asymmetriefaktor angrenzender Lagen in der Filtrationsrichtung ab. Das heißt, bei zwei Lagen hat die erste Lage einen höheren Asymmetriefaktor als die in der Filtrationsrichtung folgende zweite Lage (siehe Figur 1).

Gemäß einer weiteren bevorzugten Ausführungsform der vorliegenden Erfindung nimmt der Asymmetriefaktor angrenzender Lagen in der Filtrationsrichtung zu. Das heißt, bei zwei Lagen hat die erste Lage einen kleineren Asymmetriefaktor als die in der Filtrationsrichtung folgende zweite Lage.

Des Weiteren ist bevorzugt, dass der Asymmetriefaktor angrenzender Lagen in der Filtrationsrichtung gleichbleibt. Erfindungsgemäß wird der Asymmetriefaktor mit zweistelliger Genauigkeit (z. B. "12", "1,5" oder "0,87") verwendet und auf Grundlage der mittleren Porengröße mit dreistelliger Genauigkeit berechnet.

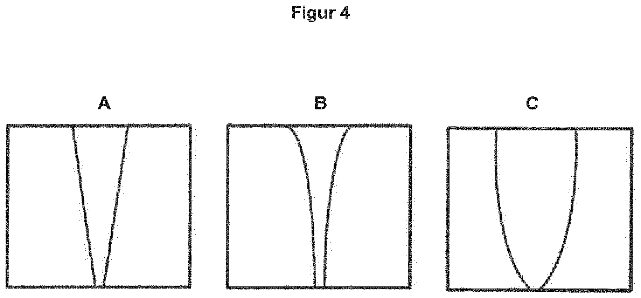

Gemäß einer bevorzugten Ausführungsform der vorliegenden Erfindung nimmt die mittlere Porengröße der Sektionen (einer, mehrerer oder aller n Lagen) der seriellen Anordnung in Dickenrichtung linear, konkav oder konvex ab (siehe Figur 4). Besonders bevorzugt nimmt die mittlere Porengröße der 4n Sektionen der seriellen Anordnung in Dickenrichtung linear, konkav oder konvex ab. Es ist auch möglich, Lagen mit linearer, konkaver und/oder konvexer Abnahme der mittleren Porengröße in einer seriellen Anordnung zu kombinieren. "Linear" bedeutet, dass die mittlere Porengröße in Filtrationsrichtung gleichbleibend abnimmt (siehe Figur 4A), "konvex" bedeutet, dass die mittlere Porengröße in Filtrationsrichtung immer schwächer abnimmt (siehe Figur 4B) und "konkav" bedeutet, dass die mittlere Porengröße in Filtrationsrichtung immer stärker abnimmt (siehe Figur 4C). Die mittleren Porengrößen können durch das Charakterisierungsverfahren bzw. wie in den Beispielen beschrieben bestimmt werden.

Durch eine lineare, konvexe bzw. konkave Abnahme der Porengröße in Filtrationsrichtung kann die erfindungsgemäße serielle Anordnung an die Teilchengrößenverteilung eines zu filtrierenden Mediums angepasst werden. Enthält das Medium einen hohen Anteil großer zu filtrierender Teilchen und nur wenige kleine Teilchen, kann durch eine konkave Abnahme optimale Effizienz erzielt werden. Ist im umgekehrten Fall der Anteil großer Teilchen klein im Verhältnis zum Anteil kleiner Teilchen, ist eine konvexe Abnahme besonders geeignet. Bei weitgehend gleichförmiger Teilchengrößenverteilung kann eine lineare Abnahme die besten Ergebnisse liefern.

Die n Lagen der seriellen Anordnung weisen vorzugsweise eine mittlere Porosität von mehr als 60 % auf. Als mittlere Porosität kann die nachstehend beschriebene physikalische Porosität ($\varepsilon p$) herangezogen werden.

Vorzugsweise weisen die vier Sektionen jeder der n Lagen mittlere Porengrößen von mindestens 0,05 $\mu$m auf.

Gemäß einer bevorzugten Ausführungsform weist die serielle Anordnung eine Dicke von 100 bis 1000 $\mu$m, vorzugsweise 120 bis 800 $\mu$m, besonders bevorzugt 150 bis 600 $\mu$m, auf.

In einer bevorzugten Ausführungsform der erfindungsgemäßen seriellen Anordnung beträgt die Dicke der Lagen unabhängig voneinander 50 bis 250 $\mu$m, vorzugsweise 100 bis 200 $\mu$m. Innerhalb dieser Bereiche kann eine effiziente Herstellbarkeit der Lagen erreicht werden.

Vorzugsweise weisen die n Lagen der seriellen Anordnung jeweils eine Strahlungsresistenz von mindestens 20 kGy, besonders bevorzugt mindestens 50 kGy, insbesondere bevorzugt mindestens 100 kGy, auf. Dadurch sind die n Lagen mit Gammastrahlung sterilisierbar, wodurch eine Gammastrahlungs-sterilisierbare serielle Anordnung erhalten werden kann. Die Strahlungsresistenz der n Lagen / der erfindungsgemäßen seriellen Anordnung ist nach oben hin nicht begrenzt und beträgt vorzugsweise höchstens 500 kGy, besonders bevorzugt höchstens 200 kGy. Erfindungsgemäß wird unter einer "Strahlungsresistenz von X kGy" verstanden, dass der Festigkeitsverlust einer Lage nach Gammabestrahlung mit einer Dosis von X kGy höchstens 30 % beträgt (X kann einen beliebigen Wert annehmen und beträgt beispielsweise 20 kGy, 50 kGy, 100 kGy oder 500 kGy). Der Festigkeitsverlust ergibt sich dabei aus der Abnahme des Festigkeitswerts der Lage nach der Gammabestrahlung mit einer Dosis von X kGy, bezogen auf den Festigkeitswert der Lage vor der Gammabestrahlung mit dieser Dosis. Beträgt der Festigkeitswert der bestrahlten Lage 80 % des Festigkeitswertes der unbestrahlten Lage, beträgt der Festigkeitsverlust erfindungsgemäß 20 %. Die Festigkeitswerte der bestrahlten und unbestrahlten Lage werden im Sinne der vorliegenden Erfindung durch ihren maximalen Zugkraftwert $F_{max}$ bei Raumtemperatur beschrieben.

Zur Bestimmung von $F_{max}$ wird hierfür eine Probe der Lage mit den Maßen 20 mm x 150 mm zugeschnitten und horizontal in eine "Zwick Z2.5/TN1S"-Materialprüfmaschine der Fa. Zwick GmbH so eingespannt, dass die freie Probenlänge zwischen den Klemmbacken 4 cm beträgt. Der Kraftaufnehmer "KAP-Z 200N" (Fa. A.S.T., D-01287 Dresden) wird mit einer Geschwindigkeit von beispielsweise 5 cm/min bewegt. Die Messdaten werden von der Gerätesoftware "testXpert" (Fa. Zwick GmbH, D-89079 Ulm) kontinuierlich erfasst und visualisiert. $F_{max}$ wird als Mittelwert von drei bestrahlten Proben der Lage beziehungsweise drei unbestrahlten Proben bestimmt. Durch die Strahlungsresistenz der Lage bzw. der erfindungsgemäßen seriellen Anordnung muss die serielle Anordnung beziehungsweise die erfindungsgemäße Filtrationseinheit zum Zweck der Sterilisierung nicht autoklaviert werden, sondern kann durch energiereiche Strahlung, zum Beispiel Gammastrahlung, keimfrei für die Verwendung vorbereitet werden. Demzufolge sind die Anordnung und die Filtrationseinheit gemäß der vorliegenden Erfindung durch die Strahlungsresistenz in besonderer Weise für die Sterilfiltration von Fluiden geeignet.

In einem weiteren Aspekt betrifft die vorliegende Erfindung ein Verfahren zur Herstellung der erfindungsgemäßen seriellen Anordnung, für die Herstellung jeder der n Lagen jeweils umfassend die Schritte

    (A) Bereitstellen einer Gießlösung, enthaltend ein membranbildendes Polymer und ein Lösemittel,
    (B) Bilden eines Films durch Aufbringen der Gießlösung auf einen ebenen Träger,
    (C) Konditionieren des Films durch Einbringen des Films in eine gasförmige Atmosphäre, welche ein erstes Fällmittel enthält ("vapour-induced phase separation", VIPS) und
    (D) Fällung der Lage durch Einbringen des konditionierten Films in ein Fällbad, welches ein zweites Fällmittel enthält ("non-solvent induced phase separation", NIPS), um die n Lagen zu erhalten; und

(E) Übereinanderlegen der n Lagen.

Schritte (A) bis (D) werden für jede Lage getrennt und unter abgewandelten Bedingungen durchlaufen. Nachdem alle Lagen bereitstehen, werden sie in Schritt (E) übereinandergelegt bzw. übereinander angeordnet, um die erfindungsgemäße serielle Anordnung zu erhalten. Wie bereits vorstehend erwähnt, sind die n Lagen in der erfindungsgemäßen seriellen Anordnung nicht miteinander verbunden.

Als membranbildendes Polymer kann grundsätzlich jedes Polymer verwendet werden, welches zur Erzeugung von mikroporösen Membranen geeignet ist, wie die vorstehend erwähnten, wobei Polyethersulfon bevorzugt ist. Der Anteil des membranbildenden Polymers beträgt beispielsweise 5 bis 50 Gew.-%, vorzugsweise 8 bis 20 Gew.-% der Gießlösung.

Als Lösemittel kann jedes für das Fällbadverfahren geeignete Lösemittel verwendet werden. Beispiele hierfür sind polare aprotische Lösemittel wie ε-Caprolactam, Dimethylformamid (DMF), N-Methylpyrrolidon (NMP), Dimethylacetamid (DMAc), Dimethylsulfoxid (DMSO) und 2-Pyrrolidon sowie deren Gemische. Der Anteil des Lösemittels beträgt beispielsweise 50 bis 95 Gew.-%, vorzugsweise 70 bis 92 Gew.-% der Gießlösung.

Gegebenenfalls kann die Gießlösung mindestens ein Co-Lösemittel (Co-Solventien) enthalten. Ein geeignetes Co-Lösemittel ist beispielsweise niedermolekulares Polyethylenglykol ($M_w$ beträgt vorzugsweise 200 bis 1500 g/mol).

Weiterhin kann die Gießlösung einen Porenbildner enthalten. Der Porenbildner unterliegt keiner besonderen Einschränkung. Geeignete Kombinationen von membranbildendem Polymer und Porenbildner sind dem Fachmann bekannt. Beispielsweise können niedermolekulare Alkohole, verschiedene anorganische Salze, wie z. B. Lithiumchlorid, hochmolekulare Polyethylenglykole ($M_w$ > 1500 g/mol) Polyvinylpyrrolidon (PVP), Polyvinylalkohol (PVA) oder deren Gemische verwendet werden. Der Anteil des Porenbildners beträgt beispielsweise 0 bis 15 Gew.-%, vorzugsweise 0,5 bis 10 Gew.-%, der Gießlösung.

Schritt (A) kann durch Vermischen der Bestandteile der Gießlösung erfolgen, beispielsweise durch Rühren. Die Dauer des Vermischens bis zum Lösen aller Bestandteile der Gießlösung hängt von der Masse der bereitgestellten Gießlösung ab und beträgt beispielsweise 1 bis 50, vorzugsweise 8 bis 16 Stunden. Typische Ansatzgrößen in Schritt (A) liegen im Bereich von 100 bis 5000 kg Gießlösung.

Nachdem alle Bestandteile der Gießlösung in gelöster Form vorliegen, wird die Gießlösung vorzugsweise entgast, beispielsweise bei 100 bis 800 mbar, beispielsweise bei 300 mbar. Durch das Entgasen wird verhindert, dass sich im Lauf des Verfahrens unkontrolliert Fehlstellen in der Membran bilden.

In Schritt (B) des erfindungsgemäßen Herstellungsverfahrens wird durch Aufbringen der Gießlösung auf einen ebenen Träger ein Film gebildet. Dies kann beispielsweise Mittels einer Düse erfolgen, vorzugsweise bei einer Temperatur der Gießlösung von 10 bis 60°C. Der Film weist üblicherweise eine Dicke von 50 bis 500 μm, vorzugsweise 100 bis 250 μm, auf.

Der Träger ist vorzugsweise eine Trommel, besonders bevorzugt aus Stahl, damit der Film durch Bewegen der Trommel den folgenden Verfahrensschritten zugeführt werden kann. Dadurch ist eine kontinuierliche und effiziente Verfahrensführung möglich. Die Trommel hat vorzugsweise eine Temperatur von 10°C bis 60°C.

In Schritt (C) wird der Film durch Einbringen des Films in eine gasförmige Atmosphäre, welche ein erstes Fällmittel enthält, konditioniert. Während Schritt (C) diffundiert das erste Fällmittel in den zunächst transparenten Film, worauf dieser sich üblicherweise eintrübt, was eine beginnende Fällungsreaktion und Strukturbildung der späteren Lage anzeigt. Im Konditionierungsschritt des Films beginnt sich die Porenstruktur der Membran zu bilden. Die Dauer des Konditionierungsschrittes beträgt beispielsweise 1 s bis 300 s.

Zur Erzeugung einer asymmetrischen Struktur ist es erforderlich, den Gießfilm in der ersten Stufe (C) durch Einbringen in eine gasförmige Atmosphäre, welche das erste Fällmittel enthält, zu konditionieren (VIPS-Prozess). Über die Atmosphäre eingetragenes Fällmittel verschiebt die Zusammensetzung des Gießfilms auf eine Weise, das eine Phasenseparation an der dem gasförmigen Fällmittel zugewandten Seite des Gießfilms initiiert wird. Die Eindringtiefe der einsetzenden Phasenseparation ist abhängig von den gewählten Prozessparametern.

Als erstes Fällmittel geeignet sind grundsätzlich alle Flüssigkeiten, mit denen das membranbildende Polymer in dem Film ausgefällt werden kann. Geeignet sind Alkanole und Wasser sowie deren Gemische.

Die gasförmige Atmosphäre, enthaltend das erste Fällmittel, weist vorzugsweise eine Temperatur von 10 bis 60 °C auf. Neben dem Fällmittel enthält die gasförmige Atmosphäre vorzugsweise ein Gas oder Gasgemisch, beispielsweise Luft oder Stickstoff, wobei Stickstoff bevorzugt ist. Der Druck der gasförmigen Atmosphäre beträgt vorzugsweise 800 bis 1200 mbar, vorzugsweise 900 bis 1100 mbar. Vorzugsweise ist die gasförmige Atmosphäre mit dem ersten Fällmittel gesättigt.

In Schritt (D) erfolgt die Fällung der Lage durch Einbringen des konditionierten Films in ein Fällbad, welches ein zweites Fällmittel enthält. Vorzugsweise besteht das Fällbad aus dem zweiten Fällmittel. Als zweites Fällmittel geeignet sind grundsätzlich alle Flüssigkeiten, mit denen das membranbildende Polymer in dem Film ausgefällt werden kann. Geeignet sind Alkanole und Wasser sowie deren Gemische.

Im Fällbad diffundiert das Fällmittel in den vorgefällten Film, und das Lösemittel der Gießlösung, Additive und der Porenbildner (bspw. PVP) diffundieren aus der sich bildenden Membran in das Fällbad, wodurch die Lage/Membran erhalten wird.

Der Schritt (D) (NIPS-Prozess) führt zu einer im Vergleich zu Schritt (C) schnelleren Fällung durch Einbringen/Eintauchen des konditionierten Films in ein das zweite Fällmittel enthaltendes Fällbad. Hierbei diffundiert das zweite Fällmittel in den Film und gleichzeitig das Lösemittel aus dem Film, sodass die Phasenseparation fortgeführt wird, und während der Konditionierung gebildete Strukturen verfestigt werden.

Die Porengröße der Membran (mittlere Porengröße aller 4 Sektionen) wird innerhalb der VIPS-Stufe (Schritt (D)) gesteuert. Die Konzentration des membranbildenden Polymers in der Gießlösung ist generell umgekehrt proportional zur erzielbaren Porengröße.

Die Membranstruktur ist unter anderem eine Funktion der Verweilzeit des Gießfilms in der Konditionierungsphase.

Nach Schritt (D) kann sich ein Extraktionsschritt anschließen, in dem die ausgefällte Lage in ein Extraktionsbad eingebracht wird. Bevorzugte Zusammensetzungen des Extraktionsbades entsprechen denen des zweiten Fällmittels. Im Extraktionsschritt wird die Lage vorzugsweise nacheinander in eine Serie von mehreren Extraktionsbädern eingebracht, um gegebenenfalls noch in der Lage/Membran vorhandene Lösemittel, Porenbildner und Quellmittel zu entfernen.

Nach Schritt (D) oder gegebenenfalls dem Extraktionsschritt kann sich ein Spülschritt anschließen, in dem die ausgefällte Lage in ein Spülbad eingebracht wird. Bevorzugt ist das Spülbad aus Wasser zusammengesetzt. Im Spülschritt wird die Lage vorzugsweise nacheinander in eine Serie von mehreren Spülbädern eingebracht, um das gegebenenfalls noch in der Lage/Membran vorhandene Fällmittel zu entfernen.

Gegebenenfalls können mehrere Extraktionsschritte und Spülschritte hintereinander und/oder abwechselnd durchgeführt werden.

Durch eine entsprechende Prozessführung können die verwendeten Fällmittel, Lösemittel, Quellmittel etc. aufbereitet und wiederverwendet werden.

Abschließend werden die in den jeweiligen Schritten (A) bis (D) erhaltenen Lagen/Membranen in Schritt (E) übereinandergelegt, wodurch die erfindungsgemäße serielle Anordnung erhalten wird.

In einem weiteren Aspekt betrifft die vorliegende Erfindung eine Filtrationseinheit, welche eine erfindungsgemäße serielle Anordnung umfasst. Die Filtrationseinheit kann eine Kassette, ein Plattenmodul, eine plissierte Kerze oder eine Kapsule sein. Die erfindungsgemäße serielle Anordnung und die erfindungsgemäße Filtereinheit eignen sich insbesondere zur Klärung von Lösungen, zur Sterilfiltration, zur Filtration von Viren und zur Filtration von Mykoplasmen.

Vorzugsweise ist die Filtrationseinheit ein Sterilfilter gemäß ASTM F 838-05, 2005 und ASTM F 838-15a, 2015. Die Permeabilität des Sterilfilters beträgt vorzugsweise mindestens 10.000 L/(m$^2$·h·bar). Die Permeabilität kann wie nachfolgend beschrieben gemessen werden. Die Standzeit (Caro®/Ovomaltine®) des Sterilfilters beträgt vorzugsweise mindestens 350 kg/m$^2$, besonders bevorzugt mindestens 400 kg/m$^2$.

Gemäß einer weiteren bevorzugten Ausführungsform ist die Filtrationseinheit ein mykoplasmenretentiver Filter gemäß PDA Technical Report No. 75, Consensus Method for Rating 0.1 μm Mycoplasma Reduction Filters. Die Permeabilität des mykoplasmenretentiven Filters beträgt vorzugsweise mindestens 2000 L/(m$^2$·h·bar). Die Permeabilität kann wie nachfolgend beschrieben gemessen werden. Die Standzeit (Caro®/Ovomaltine®) des mykoplasmenretentiven Filters beträgt vorzugsweise mindestens 300 kg/m$^2$, besonders bevorzugt mindestens 350 kg/m$^2$.

Verfahren zur Messung der Permeabilität

Die zu testenden Membranen werden als 47 mm Stanzlinge in einen geeigneten Filterhalter eingebaut. Die freie Filterfläche beträgt 12,7 cm$^2$. Bei einem Druck von 1,0 bar werden 100 mL deionisiertes Wasser bei einer Temperatur von 20 °C durch die Membran filtriert und die dafür benötigte Zeit $t_{Dfl}$ [s/100mL*12,7cm$^2$*1,0 bar)] mittels Stoppuhr ermittelt. Das Volumen an deionisiertem Wasser kann volumetrisch oder gravimetrisch bestimmt werden. Die Umrechnung auf die Permeabilität J in (L/m$^2$*h*bar) ergibt sich nach folgender Formel:

$$J = 1/\ t_{Dfl} \cdot 283465$$

Vorzugsweise weist die Filtrationseinheit eine Strahlungsresistenz von mindestens 20 kGy, besonders bevorzugt mindestens 50 kGy, insbesondere bevorzugt mindestens 100 kGy, auf. Dadurch ist die Filtrationseinheit mit Gammastrahlung sterilisierbar.

Ein Verfahren zur Charakterisierung der Poren eines Filtermediums, das nicht Teil der Erfindung ist, ist im Folgenden beschrieben. Das Verfahren umfasst die Schritte

    (1) Fixieren des Filtermediums;
    (2) Herstellen eines Querschnitts-Präparats zur Rasterelektronenmikroskopie durch Schneiden, Schleifen und Polieren des fixierten Filtermediums in der Dickenrichtung;

(3) Erzeugen eines Graustufenbildes des Querschnitts des Filtermediums durch rasterelektronenmikroskopische Analyse des Präparats;

(4) Erzeugen eines binarisierten Bildes durch Binarisieren des Graustufenbildes, wobei das binarisierte Bild aus ersten und zweiten Pixeln aufgebaut ist und die ersten Pixel eine Porenwand und die zweiten Pixel einen Poreninnenraum darstellen;

(5) Unterteilen des binarisierten Bildes in vier Sektionen, so dass jede Sektion einen gleich dicken Bereich des Querschnitts des Filtermediums abbildet und mehrere Zeilen von ersten und zweiten Pixeln aufweist, wobei die Zeilen Folgen von zweiten Pixeln umfassen;

(6) sektionsweises Bestimmen der Anzahl an zweiten Pixeln von jeder Folge zweiter Pixel und der Anzahl an Folgen zweiter Pixel; und

(7) sektionsweises Berechnen der mittleren Porengröße aus der arithmetisch gemittelten Anzahl an zweiten Pixeln pro Folge zweiter Pixel.

Das beschriebene Verfahren ist verwandt mit literaturbekannten Verfahren (Journal of Membrane Science 323 (2008) 241-246), unterscheidet sich jedoch in Details der Präparation und Auswertemethode. Anders als in der Literatur beschrieben, erfolgt die Binarisierung unter Bezugnahme auf die physikalische Porosität, wie nachstehend beschrieben.

Schritte (1) und (2) sind in keiner besonderen Weise eingeschränkt und können grundsätzlich in jeder zur Herstellung eines Präparats zur Rasterelektronenmikroskopie (REM) üblichen Weise erfolgen, beispielsweise wie in Journal of Membrane Science 372 (2011) 66-74 beschrieben.

In Schritt (1) wird das Filtermedium vorzugsweise bei Raumtemperatur (25 °C) in ein Kunststoffharz eingebettet (Kalteinbettung). Dazu wird das Filtermedium zunächst mit einem ungehärteten Kunststoffharz imprägniert, sodass das Filtermedium vollständig mit dem Kunststoffharz benetzt und sämtliche Poren des Filtermediums damit ausgefüllt sind. Danach wird das Kunststoffharz gehärtet. Geeignete Kunststoffharze sind dem Fachmann bekannt und umfassen beispielsweise Polyurethan (PU)- und Epoxidharze. Durch das Fixieren wird dem Filtermedium eine hohe Stabilität verliehen, sodass aus dem fixierten Filtermedium ein Präparat zur REM-Analyse hergestellt werden kann.

Die Herstellung des Querschnitts-Präparats erfolgt in Schritt (2) durch Schneiden des fixierten Filtermediums in der Dickenrichtung des Filtermediums, gefolgt von Schleifen und Polieren (beispielsweise mit einem Schleif- und Poliergerät EcoMet/Automet™ 250 der Firma Buehler ITW Test & Measurement GmbH, Esslingen am Neckar). Das geschnittene fixierte Filtermedium wird danach halbautomatisch geschliffen (4 verschiedene Korngrößen: P320, P600, P1200, P2500) und poliert (3 $\mu$m-Diamant- und Aluminiumoxid-Suspension), um hinreichend glatte Probenoberflächen zur Untersuchung per BSE-Detektor (Rückstreuelektronendetektor) zu erhalten.

In Schritt (3) wird das Präparat einer REM-Analyse unterzogen, wodurch ein Graustufenbild des Querschnitts des Filtermediums erhalten wird. Unterschiedliche Grautöne stellen verschiedene Bereiche (Porenwände und Poreninnenräume) des Filtermediums dar. Vorzugsweise wird ein Rasterelektronenmikroskop mit Rückstreuelektronendetektor (BSE-Detektor) verwendet. Im Gegensatz zu Sekundärelektronenvervielfacherdetektoren (SEV-Detektoren) zeigen BSE-Detektoren einen Materialkontrast anstelle einer Topographie, wodurch in einer entsprechend erhaltenen REM-Aufnahme nur die Oberfläche des Präparats ohne die tieferliegenden Schichten zu sehen ist. In Schritt (3) wird ein Graustufenbild des Präparats erhalten, wobei das Graustufenbild eine Draufsicht auf einen Querschnitt des Filtermediums darstellt.

Bei der Durchführung der REM-Aufnahme wird insbesondere in engporigen Bereichen (Bereiche mit Porengrößen < 0,5 $\mu$m) die Vergrößerung vorzugsweise so gewählt, dass Porenwand und Poreninnenraum im Graustufenbild gut unterscheidbar sind, um in der Bildanalyse/Binarisierung von Schritt (4) ein aussagekräftiges Ergebnis zu erhalten. Mit entsprechend gewählter Vergrößerung erfolgt die Aufnahme des gesamten Querschnitts des Filtermediums. Gegebenenfalls können mehrere Einzelaufnahmen verschiedener Abschnitte des Querschnitts des Filtermediums erzeugt und per MIA (multi image alignment) zu einem einzigen Graustufenbild zusammengefügt werden.

Vorzugsweise stellt das Graustufenbild (REM-Aufnahme), welches aus in Zeilen und Spalten angeordneten Pixeln besteht, mindestens 50 Poren/Zeile, besonders bevorzugt mindestens 75 Poren/Zeile dar. Dadurch kann sichergestellt werden, dass aus dem erhaltenen Graustufenbild auch in grobporigen Bereichen (Bereiche mit Porengrößen > 3 $\mu$m) statistisch aussagekräftige Ergebnisse für die mittlere Porengröße (auch als "mittlere Weglänge" bezeichnet) erhalten werden. Die vorstehende Mindestanzahl von Poren/Zeile kann beispielsweise durch das bereits erwähnte MIA (multi image alignment) erhalten werden.

In grobporigen Bereichen wird gelegentlich eine "Subporosität" innerhalb der Porenwände beobachtet. Die "Subporen" können eine Fehlerquelle für die Bildauswertung darstellen, insbesondere dann, wenn sie bei Verwendung eines Kunststoffharzes in Schritt (1) nicht oder nur unvollständig mit dem Harz gefüllt werden. Die "Subporen" sind für die Filtrationszusammensetzung nicht erreichbar und haben damit keine Größenausschlussfunktion, beeinflussen aber die Gesamtporosität des Filtermediums. Um dies zu beheben, wird vorzugsweise das Graustufenbild vor dem Binarisieren mit einem closing- und fill-hole-Filter (closing-Filter und fill-hole Algorithmus) überarbeitet. Closing- und fill-hole-Algorithmen sind dem Fachmann bekannt. Um zu vermeiden, dass der Algorithmus Artefakte in den engporigen Bereichen des Gesamtbildes erzeugt, wird vorzugsweise die Stärke des closing-Schrittes abschnittsweise in Abhängigkeit von der Porengröße angepasst. Dem zugrunde liegt eine Vorbestimmung der mittleren Porengröße bis zum closing/fill-hole-Schritt. In engporigen Bereichen (in denen keine Subporosität vorhanden ist) wird das Graustufenbild dadurch nicht verändert.

Zur vereinfachten, vorzugsweise EDV-gestützten Auswertung des Graustufenbildes wird dieses in Schritt (4) durch Binarisieren in ein binarisiertes Bild umgewandelt. Übliche Verfahren und entsprechende EDV-Programme zum Binarisieren sind dem Fachmann bekannt und können verwendet werden. Vor und nach dem Binarisieren erfolgt vorzugsweise jeweils ein Bildbearbeitungschritt (Vor- und Nachbearbeitung, Pre- und Post-Processing), um bei der Binarisierung Artefakte zu reduzieren. Besonders bevorzugt wird zur Artefaktunterdrückung ein Median-Filter angewendet.

Zur Binarisierung ist ein Graustufen-Schwellenwert erforderlich, der darüber entscheidet, welche Graustufe des Graustufenbildes erste und zweite Pixel des binarisierten Bildes voneinander abgrenzt. Sind die Pixel des Graustufenbildes heller als der Schwellenwert, zählen sie zu den ersten Pixeln, welche gegebenenfalls weiß dargestellt werden können, und sind die Pixel des Graustufenbildes so dunkel wie oder dunkler als der Schwellenwert, zählen sie zu den zweiten Pixeln, welche gegebenenfalls schwarz dargestellt werden können. Erste und zweite Pixel werden so gewählt, dass erste Pixel eine Porenwand und zweite Pixel einen Poreninnenraum darstellen.

Anders als in Journal of Membrane Science 323 (2008) 241-246 beschrieben, wird in Schritt (4) der Schwellenwert so eingestellt, dass das Verhältnis der Anzahl der zweiten Pixel zur Summe der Anzahl der ersten Pixel und der Anzahl der zweiten Pixel des binarisierten Bildes der physikalisch bestimmten Gesamtporosität möglichst genau entspricht, wobei eine Abweichung der Gesamtporosität des binarisierten Bildes um $\pm$ 3% von der physikalisch bestimmten Gesamtporosität toleriert wird.

Die Gesamtporosität des binarisierten Bildes ist das Verhältnis der Anzahl aller zweiten Pixel zur Anzahl aller ersten und zweiten Pixel.

Als physikalische Porosität ($\varepsilon_p$) wird der Porositätsmittelwert über den gesamten Querschnitt des Filtermediums verstanden. Dieser lässt sich aus geometrischen und gravimetrischen Daten einer Probe des Filtermediums einfach berechnen:

$$\varepsilon_p = \frac{d_{FM} \cdot A_{FM}}{\dfrac{m_{FM}}{\rho_{Mat}}}$$

Dabei steht $d_{FM}$ für die Dicke der Probe, $A_{FM}$ für den Flächeninhalt einer der Hauptoberflächen der Probe, $m_{FM}$ für die Masse der Probe und $\rho_{Mat}$ für die Dichte des Materials, welches das Filtermedium bildet (z. B. ein membranbildenden Polymer). Die Dichte kann entweder der Literatur entnommen werden oder mittels dem Fachmann bekannter Methoden bestimmt werden. Zur Bestimmung der physikalischen Porosität kann vor Schritt (1) eine kreisrunde Probe (47 mm Durchmesser) aus dem zu untersuchenden Bereich des Filtermediums entnommen werden.

Gewöhnlich besitzen Filtermedien im Allgemeinen und mikroporöse Membranen im Besonderen ein in den Flächenrichtungen weitgehend homogenes Porengrößenprofil.

In den Schritten (5) und (6) erfolgt die Auswertung des binarisierten Bildes, um zu dem Porengrößenprofil des Filtermediums zu gelangen.

Zunächst wird in Schritt (5) das binarisierte Bild in Filtrationsrichtung/Dickenrichtung in vier Sektionen gleicher Dicke unterteilt. Jede Sektion stellt einen Längsschnitt des Filtermediums entlang der Flächenrichtung dar. Die Sektionen verlaufen parallel zueinander. Die Grenzen zwischen den Sektionen verlaufen entlang der Flächenrichtung, d. h. parallel zu den Hauptoberflächen des Filtermediums bzw. deren Entsprechungen in dem binarisierten Bild.

Jede Sektion des binarisierten Bildes umfasst eine Mehrzahl von Zeilen von ersten und zweiten Pixeln. Jeder Pixel bildet einen gleich großen quadratischen Abschnitt des Querschnitts des Filtermediums ab, und die Kantenlänge jedes Pixel-Quadrats entspricht einer bestimmten Länge des abgebildeten Filtermediums. Sind mehrere zweite Pixel einer Zeile direkt benachbart, wird die Gesamtheit dieser zweiten Pixel als "eine Folge von zweiten Pixeln" bezeichnet. Eine Zeile kann mehrere Folgen von zweiten Pixeln enthalten. Die Anzahl von zweiten Pixeln einer Folge stellt ein Maß für die freie Weglänge zwischen zwei Porenwänden dar. Entsprechend kann die mittlere freie Weglänge auch als mittlere Porengröße bezeichnet werden. Vorzugsweise gilt eine Folge von zweiten Pixeln (ein Poreninnenraum) beziehungsweise eine Folge von ersten Pixeln (eine Porenwand) erst dann als unterbrochen, wenn die Folge von einer Anzahl von ersten bzw. zweiten Pixeln unterbrochen wird, welche einer Länge von mehr als 50 nm entspricht. Diese Länge entspricht in etwa der Eindringtiefe der Elektronen, sodass bei mehr als 50 nm ein belastbareres Ergebnis vorliegt.

In Schritt (6) werden die Folgenlängen (Anzahl von zweiten Pixeln jeder Folge) und die Folgenzahl (Anzahl der Folgen zweiter Pixel jeder Sektion) bestimmt. Daraus kann für jede Sektion das arithmetische Mittel der Folgenlängen errechnet werden, wobei dieses Mittel direkt proportional zur mittleren Porengröße der jeweiligen Sektion ist. Darüber hinaus ist die Verteilung der Folgenlängen jeder Sektion direkt proportional zur Porengrößenverteilung. Das Verhältnis der Anzahl von zweiten Pixeln zur Anzahl von ersten Pixeln einer Sektion ist direkt proportional zur Porosität der jeweiligen Sektion. Somit können durch das Verfahren Querschnittsprofile der mittleren Porengröße, der Porengrößenverteilung und der Porosität erhalten werden.

Mit dem Verfahren wird ein Porengrößenprofil erstellt. Dazu wird in Schritt (7) für jede Sektion (sektionsweise) das arithmetische Mittel der Folgenlängen errechnet, woraus durch Multiplizieren mit einem Proportionalitätsfaktor die mittlere Porengröße der jeweiligen Sektion erhalten wird.

In dem Charakterisierungsverfahren ist das Filtermedium bevorzugt eine mikroporöse Membran.

Figur 1 zeigt schematisch eine erfindungsgemäße serielle Anordnung mit zwei (n = 2) Lagen F1 und F2. Jede Lage wird in 4 Sektionen F1-1 bis F1-4 bzw. F2-1 bis F2-4 unterteilt. Die Filtrationsrichtung ist durch einen nach unten weisenden Pfeil angezeigt. Durch jeweils zwei V-förmige und in Filtrationsrichtung aufeinander zulaufende Linien ist dargestellt, dass die Porengröße der n Lagen in der Dickenrichtung bzw. in Filtrationsrichtung abnimmt. Durch die unterschiedlichen Steigungen der Linien ist gezeigt, dass bei der in Figur 1 dargestellten bevorzugten Ausführungsform die zwei Lagen verschiedene Asymmetriefaktoren aufweisen. Die beiden Lagen sind mit einem Abstand voneinander dargestellt, können in der Realität aber direkt aneinandergrenzen. In dieser bevorzugten Ausführungsform sind die Porengrößen der benachbarten Lagen im Grenzbereich ungefähr gleich, was durch den ungefähr gleichen horizontalen Abstand der jeweiligen aufeinander zulaufenden Linien im Bereich der Lagen F1-4 und F2-1 dargestellt ist.

Figur 2 zeigt schematisch die Bestimmung des Verschnitts einer seriellen Anordnung.

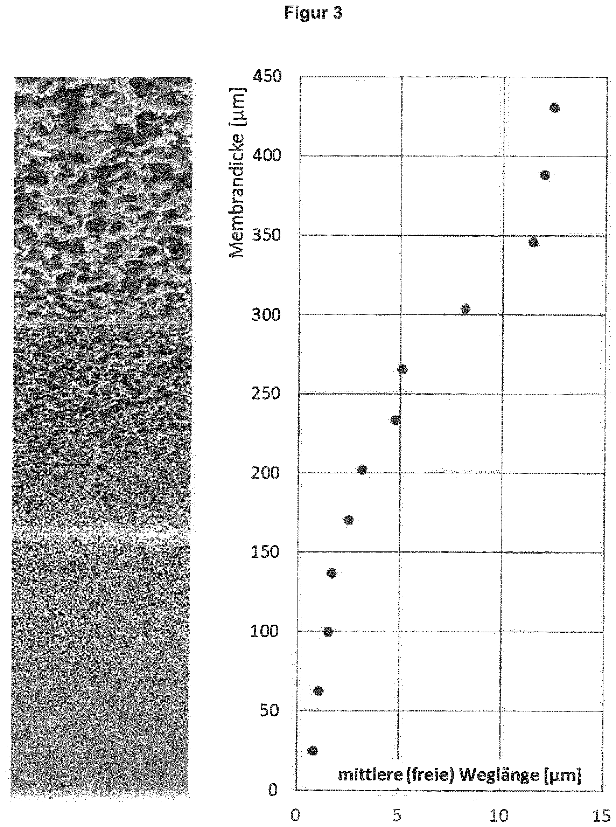

Figur 3 zeigt auf der linken Seite beispielhafte REM-Aufnahmen, erhalten durch Verwendung eines SEV-Detektors. Die REM-Aufnahmen (Querschnittsaufnahmen) sind entsprechend der Reihenfolge der erfindungsgemäßen seriellen Anordnung angeordnet. Auf der rechten Seite ist das Porengrößenprofil über die Gesamtdicke der seriellen Anordnung (unterteilt in vier Sektionen pro Lage, erhalten durch das Charakterisierungsverfahren) gezeigt, wobei die mittlere Porengröße jeder Lage durch jeweils eine Kreisscheibe dargestellt ist.

Figur 4 zeigt schematisch ein lineares (A), ein konvexes (B) und ein (C) konkaves Porengrößenprofil.

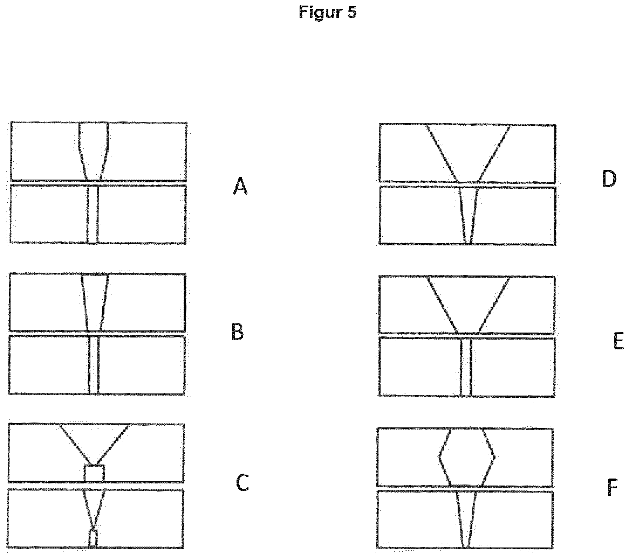

Figur 5 zeigt schematisch Vergleichsbeispiele (A bis C, E und F) und eine erfindungsgemäße serielle Anordnung mit zwei Lagen (D).

A:      Die serielle Anordnung weist eine Lage mit einem Asymmetriefaktor < 1,5 auf.
B:      Die serielle Anordnung weist eine Lage mit einem Asymmetriefaktor < 1,5 auf.
C:      Die Porengröße fällt nicht in der Dickenrichtung im Wesentlichen kontinuierlich ab. Der Verschnitt beträgt mehr als 30%.
D:      Erfindungsgemäßes Beispiel.
E:      Die serielle Anordnung weist eine Lage mit einem Asymmetriefaktor < 1,5 auf.
F:      Die Porengröße fällt nicht in der Dickenrichtung im Wesentlichen kontinuierlich
ab.     Der Verschnitt beträgt mehr als 30%.

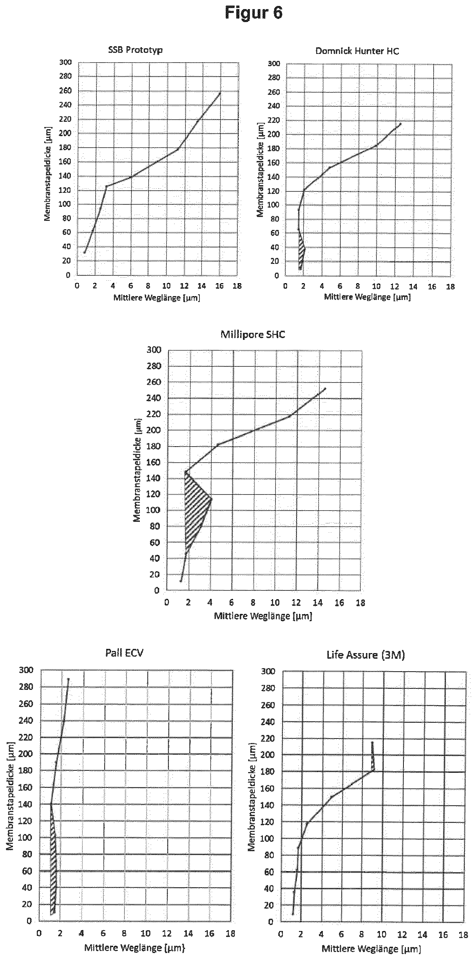

Figur 6 zeigt die Porengrößenprofile der in Beispiel 1 untersuchten seriellen Anordnungen sowie den Verschnitt.

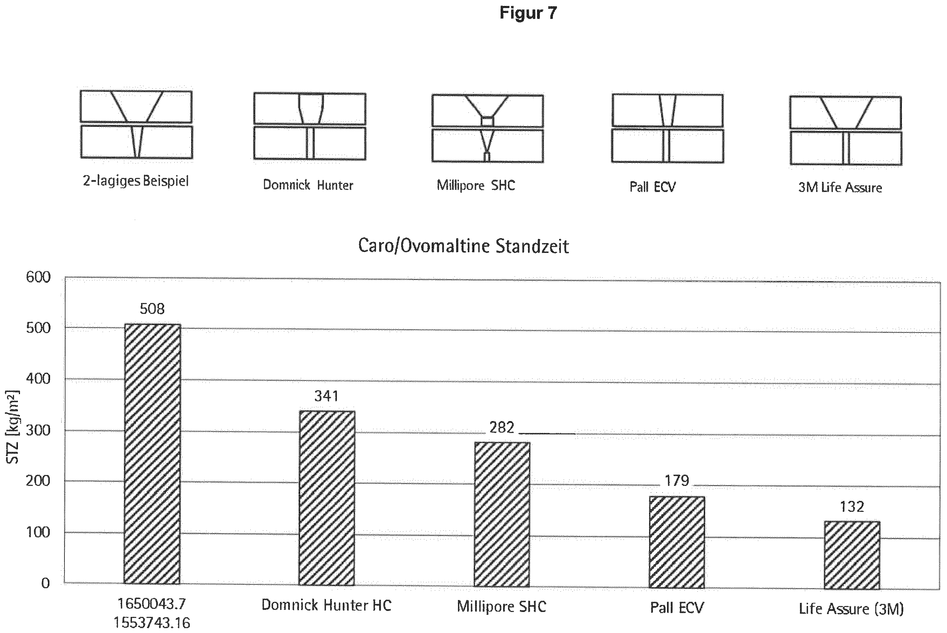

Figur 7 zeigt schematisch die Porengrößenprofile der in Beispiel 1 untersuchten seriellen Anordnungen sowie experimentell bestimmte Standzeiten der Anordnungen (Caro/Ovomaltine).

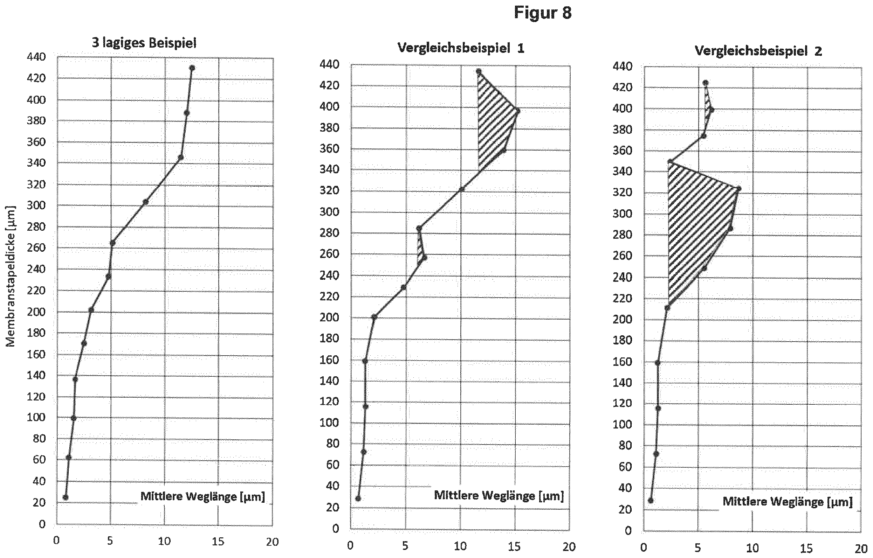

Figur 8 zeigt die Porengrößenprofile der in Beispiel 2 untersuchten seriellen Anordnungen sowie den Verschnitt.

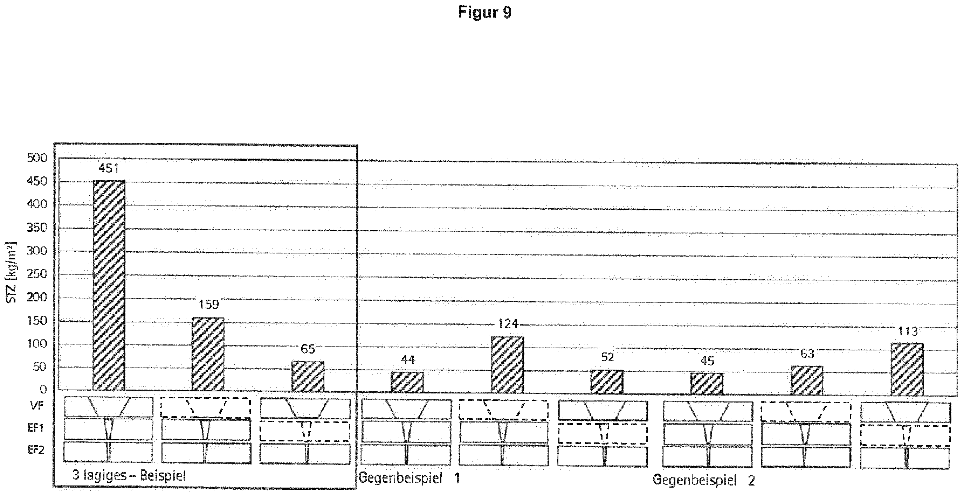

Figur 9 zeigt die Standzeiten STZ (Caro/Ovomaltine) in kg/m$^2$ für dreilagige erfindungsgemäße serielle Anordnungen im Vergleich zu zweilagigen Vergleichsbeispielen, denen entweder der Vorfilter, d. h. die erste Filterlage, oder der mittlere Filter, d. h. die zweite Filterlage fehlen.

Die nachstehenden Beispiele dienen als weitere Erläuterung der vorliegenden Erfindung, ohne darauf beschränkt zu sein.

Beispiele

*Charakterisierung der Poren*

Bei der Charakterisierung der Poren der untersuchten Membranen unter Verwendung einer MATLAB®-Routine wurde folgender Parametersatz zu Grunde gelegt.

- Laden des Bildes (Abmessungen z. B. 3584 × 2671 Pixel)

    o Angabe der Bildbreite auf Basis der Auflösung/Vergrößerung: Diese wurde so angepasst, dass klare Übergänge zwischen Porenwand und Porenraum zu erkennen sind.

- Zuschneiden des Bildes, so dass die Membran das Bild vollständig füllt (manuell in MATLAB®)
- Eingabe der physikalischen Porosität (gemessen) = 80 %
- Angabe von minimaler Poreninnenraumgröße und minimalem Porenwanddurchmesser = 0,05 $\mu$m (Auflösungsgrenze aufgrund der Eindringtiefe der Elektronen)
- Festlegung Anzahl der Sektionen = 4
- Median-Filter vor Binarisieren = 3 oder Median-Filter nach Binarisieren = 3
- Binarisieren mit Schwellwert-Kriterium "Porosität"
- Median-Filter vor Binarisieren = 3
- closing/fillhole Filter variabler Stärke, abhängig von bestimmter mittlerer Porengröße (in Abschnitten von 500 Bildzeilen; Stärke des closing/fillhole-Filters: mittlere Porengröße des jeweiligen 500-Bildzeilen-Abschnitts /10)
- Ausgabe der mittleren Porengrößen pro Sektion.

*Verfahren zur Bestimmung der Standzeit*

Caro/Ovomaltine-Standzeit

Die Standzeit (Schmutzaufnahmekapazität; STZ) wurde durch Filtration mit einer Prüf-Filtrationszusammensetzung auf Basis einer wässrigen Suspension eines Gemisches, bestehend aus Ovomaltine®- und Caro®-Pulver (0,0463 Gew.-% Caro®-Pulver; 0,0145 Gew.-% Ovomaltine®-Pulver, wobei der Rest Wasser war), ermittelt (Caro/Ovomaltine STZ). Die Messung wurde mit einem 47-mm-Filtergehäuse bei einem Druck von 1 bar durchgeführt. Filtriert wurde dabei, bis der Transmembranfluss nur noch 5% des anfänglichen Transmembranflusses betrug. Das Filtrat wurde aufgefangen und gewogen. Die Menge an Filtrat in Gramm pro Filterfläche entspricht der Standzeit.

DMEM/PP3-Standzeit

In einem alternativen Verfahren wurde die Standzeit (DMEM/PP3) durch Filtration mit einer Prüf-Filtrationszusammensetzung auf Basis einer wässrigen Suspension, enthaltend 13.4 g/L Dulbecco's Modified Eagle's Medium (DMEM) sowie 7.5 g/L Proteosepepton Nr. 3 (PP3) ermittelt. Die Messung wurde mit einem 25-mm-Filtergehäuse aus Polypropylen bei einem Druck von 2 bar durchgeführt. Filtriert wurde dabei, bis der Transmembranfluss nur noch 10% des anfänglichen Transmembranflusses betrug.
Das Filtrat wurde aufgefangen und gewogen. Die Menge an Filtrat in Gramm pro Filterfläche entspricht der Standzeit.

Beispiel 1 - n=2

Untersucht wurden eine erfindungsgemäße serielle Anordnung ("SSB Prototype", "1650043.7/1553743.16", "2-lagiges Beispiel") sowie die kommerziell erhältlichen Domnick Hunter® HC, Millipore® SHC, Pall® ECV und Life Assure von 3M Innovative Properties. Die seriellen Anordnungen wurden wie vorstehend angegeben untersucht. Die daraus erhaltenen Porositätsprofile sind in Figur 6 gezeigt. Vereinfachte Schemata der Porositätsprofile sind in Figur 7 gezeigt.
Die Standzeiten der fünf verschiedenen seriellen Anordnungen mit zwei Lagen (n = 2) wurden wie vorstehend angegeben bestimmt. Die Ergebnisse sind in Figur 7 und Tabelle 1 gezeigt.
Bei dem erfindungsgemäßen Ausführungsbeispiel ("1650043.7/1553743.16" in Figur 7) betrug die Standzeit (Caro/Ovomaltine) 508 kg/m$^2$, während bei den Vergleichsbeispielen aus dem Stand der Technik die Standzeiten nur zwischen 132 und 341 kg/m$^2$ lagen, wobei es sich bei allen Beispielen um Sterilfilter mit der gleichen Abscheiderate (nominelle Porengröße 0,2 $\mu$m) handelte. Entsprechende Ergebnisse wurden für die DMEM/PP3-Standzeit erhalten: Das erfindungsgemäße Beispiel erreichte eine Standzeit von 2546 kg/m$^2$, wohingegen die Vergleichsbeispiele lediglich Standzeiten von 2063 kg/m$^2$ (Domnick Hunter$^®$ HC), 2060 kg/m$^2$ (Millipore$^®$ SHC), 1423 kg/m$^2$ (Pall$^®$ ECV) und 1560 kg/m$^2$ (Life Assure) erzielten.

Beispiel 2 - n = 2 oder 3

Erfindungsgemäße serielle Anordnungen und Vergleichsanordnungen wurden hergestellt und wie vorstehend beschrieben untersucht (Charakterisierung der Poren und Bestimmung der Standzeit).

Die Ergebnisse sind in Tabelle 1 sowie Figur 8 gezeigt.

Tabelle 1

| | | drei Lagen | | | zwei Lagen | | | | |
|---|---|---|---|---|---|---|---|---|---|
| | | 3-lagiges Beispiel | Vergleichs-beispiel 1 | Vergleichs-beispiel 2 | 2-lagiges Beispiel | Domnick Hunter HC | MP SHC | Pall ECV | 3M Life assure |
| Vorfilter-membran | Größte Sektion | 12,4 | 15,2 | 6,2 | 15,9 | 12,5 | 14,6 | 2,6 | 10,4 |
| | Kleinste Sektion | 8,1 | 10,1 | 2,4 | 6 | 2,1 | 1,7 | 1,1 | 2,8 |
| | Asymmetrie | 1,5 | 1,5 | 2,6 | 2,7 | 6,0 | 8,6 | 2,4 | 3,7 |
| | Dicke (µm) | 155 | 130 | 110 | 160 | 130 | 140 | 200 | 130 |
| | Verschnitt (µm) | 0 | 95 | 50 | 0 | 0 | 0 | 0 | 50 |
| Mittlere Membran | Größte Sektion | 5,1 | 6,6 | 8,7 | kein mittlerer Filter | | | | |
| | Kleinste Sektion | 2,5 | 2,1 | 2,1 | | | | | |
| | Asymmetrie | 2,0 | 3,1 | 4,1 | | | | | |
| | Dicke (µm) | 135 | 110 | 135 | | | | | |
| | Verschnitt (µm) | 0 | 35 | 135 | | | | | |
| Endfilter-membran | Größte Sektion | 1,6 | 1,3 | 1,3 | 3,2 | 2,15 | 4,1 | 1,6 | 1,8 |
| | Kleinste Sektion | 0,8 | 0,7 | 0,7 | 0,8 | 1,45 | 1,3 | 1,4 | 1,3 |
| | Asymmetrie | 2,0 | 1,9 | 1,9 | 4,0 | 1,5 | 3,2 | 1,1 | 1,4 |
| | Dicke (µm) | 140 | 160 | 160 | 130 | 120 | 140 | 125 | 110 |
| | Verschnitt (µm) | 0 | 0 | 0 | 0 | 65 | 100 | 70 | 0 |
| Gesamt | Dicke (µm) | 430 | 400 | 400 | 290 | 250 | 280 | 325 | 240 |
| | Verschnitt (µm) | 0 | 130 | 185 | 0 | 65 | 100 | 140 | 35 |
| | **Verschnitt(%)** | **0** | **33** | **46** | **0** | **26** | **36** | **43** | **15** |
| | **Gesamt Asymm** | **16** | **22** | **9** | **20** | **9** | **11** | **2** | **8** |
| | Caro STZ (kg/m²) | 451 | 44 | 45 | 508 | 341 | 282 | 179 | 132 |
| | DMEM/PP3 STZ (kg/m²) | 2526 | 1823 | 1700 | 2546 | 2063 | 2060 | 1423 | 1560 |
| | Flussrate (L/m²) | 3300 | 1900 | 1700 | 12800 | 15000 | 10400 | 11600 | 14200 |

Die in Tabelle 1 mit "Größte Sektion" bzw. "Kleinste Sektion" bezeichneten Einträge geben die größte bzw. kleinste mittlere Porengröße aus den vier Sektions-Porengrößen der jeweiligen Lage in Mikrometern an.

Wie aus Tabelle 1 ersichtlich, wies keine der zweilagigen seriellen Anordnungen Domnick Hunter HV$^®$, Pall$^®$ ECV und 3M Innovative Properties Life Assure sowie des dreilagigen Vergleichsbeispiels 2 eine Gesamtasymmetrie von 10 oder mehr auf. Darüber hinaus wiesen die seriellen Anordnungen Pall$^®$ ECV und 3M Innovative Properties Life Assure jeweils eine Lage mit einem Asymmetriefaktor von weniger als 1,5 auf. Zudem wiesen die seriellen Anordnungen Millipore$^®$ SHC und Pall$^®$ ECV keine im Wesentlichen kontinuierlich abnehmende Porengröße der zwei Lagen in Dickenrichtung auf. Der Verschnitt betrug 36 % beziehungsweise 43 %. Die vorgenannten zwei- beziehungsweise dreilagigen seriellen Anordnungen der Vergleichsbeispiele wiesen eine geringere Standzeit auf als die erfindungsgemäßen seriellen Anordnungen mit gleicher Lagenanzahl.

Vergleichsbeispiele 1 und 2 von Beispiel 2 wiesen keine im Wesentlichen kontinuierlich abnehmende Porengröße der drei Lagen in Dickenrichtung auf. Der Verschnitt betrug 33 % beziehungsweise 46 %. Wie bereits erwähnt, wiesen die vorgenannten eine geringere Standzeit auf als die erfindungsgemäße dreilagige serielle Anordnung von Beispiel 2.

In Figur 9 sind die Standzeiten Caro/STZ des dreilagigen Beispiels und der dreilagigen Vergleichsbeispiele/Gegenbeispiele 1 und 2 dargestellt (siehe vorstehende Tabelle 1). Figur 9 zeigt zudem, dass bei einer besonders bevorzugten Ausführungsform der erfindungsgemäßen seriellen Anordnung mit drei Lagen und einem Verschnitt von höchstens 30 % eine besonders hohe Standzeit von 451 kg/m$^2$ erzielt werden konnte, wohingegen bei einer Abwandlung des dreilagigen Beispiels zu einer zweilagigen seriellen Anordnung durch Entfernung der ersten Lage, d. h. des Vorfilters VF, die Standzeit auf 159 kg/m$^2$ sank. Gleiches gilt tendenziell für eine Abwandlung der dreilagigen seriellen Anordnung, bei welcher die zweite Lage, d. h. der mittlere Filter EF1, fehlt.

Bei dieser Abwandlung sank die Standzeit auf nur 65 kg/m$^2$. Bei den dreilagigen Vergleichsbeispielen "Gegenbeispiel 1" und "Gegenbeispiel 2", welche einen deutlich höheren Verschnitt von 33 % (Gegenbeispiel 1) bzw. 46 % (Gegenbeispiel 2) aufwiesen, hatte dahingegen die Entfernung entweder der ersten (VF) oder zweiten EF1) Lage aus der dreilagigen seriellen Anordnung kaum einen Einfluss auf die ohnehin deutlich geringere Standzeit, die beim Gegenbeispiel 1 und seinen zweilagigen Abwandlungen maximal 124 kg/m$^2$ und beim Gegenbeispiel 2 und seinen zweilagigen Abwandlungen maximal 113 kg/m$^2$ betrug.

Durch die vorliegende Erfindung wird eine serielle Anordnung mit n Lagen asymmetrischer mikroporöser Filtermedien, insbesondere Membranen, bereitgestellt, welche auf effiziente Weise eine hohe Standzeit erzielt. Totvolumina und eine vorzeitige Verblockung können vermieden werden. Mithilfe des Charakterisierungsverfahrens, das nicht Teil der Erfindung ist, ist es zudem möglich, Filtermedien exakt zu kennzeichnen, sodass im Herstellungsverfahren der seriellen Anordnung das Porengrößenprofil jeder Lage kontrolliert eingestellt werden kann.

## Patentansprüche

1. Serielle Anordnung von Filtermedien, die n Lagen umfasst, wobei

   n mindestens zwei beträgt,
   jede der n Lagen ein asymmetrisches Filtermedium mit einem Asymmetriefaktor von mindestens 1,5 ist,
   die n Lagen einen Gesamtasymmetriefaktor von mindestens 10 aufweisen, und die Porengröße der n Lagen in Dickenrichtung der seriellen Anordnung im Wesentlichen kontinuierlich abnimmt,
   wobei die Anordnung ein Zusammenbau aus n Lagen von asymmetrischen Filtermedien ist, welche lose übereinandergestapelt sind und in den Randbereichen der Lagen in ein Filtergehäuse eingebettet sind.

2. Serielle Anordnung nach Anspruch 1, wobei das Filtermedium eine mikroporöse Membran ist.

3. Serielle Anordnung nach einem der vorhergehenden Ansprüche, welche 2 bis 10, vorzugsweise 2 oder 3, Lagen umfasst.

4. Serielle Anordnung nach einem der vorhergehenden Ansprüche, welche eine Dicke von 100 bis 1000 $\mu$m, vorzugsweise 150 bis 600 $\mu$m, aufweist.

5. Serielle Anordnung nach einem der vorhergehenden Ansprüche, wobei die Porengröße der n Lagen in Dickenrichtung linear, konkav oder konvex abnimmt.

6. Serielle Anordnung nach einem der vorhergehenden Ansprüche, wobei die Dicke der Lagen unabhängig voneinander 50 bis 250 $\mu$m, vorzugsweise 100 bis 200 $\mu$m, beträgt.

7. Serielle Anordnung nach einem der vorhergehenden Ansprüche, wobei die Lagen aus PVDF, PTFE, Celluloseester, Cellulosehydrat, Polyamid, Polysulfon, Polyarylsulfon, Polyacrylsäure, Polymethacrylsäure, Acrylsäure-Methacrylsäure-Copolymer, Polyethersulfon oder einem Gemisch daraus, vorzugsweise aus Polyethersulfon, aufgebaut sind.

8. Verfahren zur Herstellung einer seriellen Anordnung nach einem der Ansprüche 1 bis 7,

   für die Herstellung jeder der n Lagen jeweils umfassend die Schritte

      (A) Bereitstellen einer Gießlösung, enthaltend ein membranbildendes Polymer und ein Lösemittel,
      (B) Bilden eines Films durch Aufbringen der Gießlösung auf einen ebenen Träger,
      (C) Konditionieren des Films durch Einbringen des Films in eine gasförmige Atmosphäre, welche ein erstes Fällmittel enthält, und
      (D) Fällung der Lage durch Einbringen des konditionierten Films in ein Fällbad, welches ein zweites Fällmittel enthält,

   um die n Lagen zu erhalten; und
   (E) Übereinanderlegen der n Lagen.

9. Filtrationseinheit, umfassend eine serielle Anordnung nach einem der Ansprüche 1 bis 7, wobei die Filtrationseinheit eine Kassette, ein Plattenmodul, eine plissierte Kerze oder eine Kapsule ist.

10. Verwendung der seriellen Anordnung nach einem der Ansprüche 1 bis 7 oder einer Filtrationseinheit nach Anspruch 9 zur Sterilfiltration, zur Filtration von Viren und/oder zur Filtration von Mykoplasmen.


**Claims**

1. A serial arrangement of filter media comprising n layers, wherein

   n is at least two,
   each of the n layers is an asymmetrical filter medium with an asymmetry factor of at least 1.5,
   the n layers have an overall asymmetry factor of at least 10, and
   the pore size of the n layers continuously decreases substantially in the thickness direction of the serial arrangement,
   wherein the arrangement is an assembly of n layers of asymmetrical filter media, which are loosely stacked on top of one another and are embedded in a filter housing in the edge regions of the layers.

2. The serial arrangement according to claim 1, wherein the filter medium is a microporous membrane.

3. The serial arrangement according to any of the foregoing claims, which comprises 2 to 10, preferably 2 or 3, layers.

4. The serial arrangement according to any of the foregoing claims, which has a thickness of from 100 to 1000 $\mu$m, preferably 150 to 600 $\mu$m.

5. The serial arrangement according to any of the foregoing claims, wherein the pore size of the n layers decreases linearly, concavely or convexly in the thickness direction.

6. The serial arrangement according to any of the foregoing claims, wherein the thickness of the layers independently from one another is 50 to 250 $\mu$m, preferably 100 to 200 $\mu$m.

7. The serial arrangement according to any of the foregoing claims, wherein the layers are constructed from PVDF, PTFE, cellulose ester, cellulose hydrate, polyamide, polysulfone, polyacrylic acid, polymethacrylic acid, acrylic acid-methacrylic acid copolymers, polyethersulfone or a mixture thereof, preferably of polyethersulfone.

8. The method for producing a serial arrangement according to any of claims 1 to 7,

   for producing each of the n layers, in each case comprising the steps of

   (A) providing a casting solution, containing a membraneforming polymer and a solvent,
   (B) forming a film by applying the casting solution to a level carrier,
   (C) conditioning the film by introducing the film into a gaseous atmosphere, which contains the first precipitation agent, and
   (D) precipitating the layer by introducing the conditioned film into a precipitation bath, which contains a second precipitation agent,

   in order to obtain the n layers; and
   (E) putting the n layers on top of one another.

9. A filtration unit, comprising a serial arrangement according to any of claims 1 to 7, wherein the filtration unit is a cassette, a plate module, a pleated candle or a capsule.

10. Use of the serial arrangement according to any of claims 1 to 7 or a filtration unit according to claim 9 for the sterile filtration, for the filtration of viruses and/or for the filtration of mycoplasmas.


**Revendications**

1. Agencement en série de milieux filtrants comportant n couches, dans lequel

   n est au moins égal à deux,

chacune des n couches est un milieu filtrant asymétrique ayant un facteur d'asymétrie d'au moins 1,5,
les n couches présentent un facteur d'asymétrie global d'au moins 10, et la taille des pores des n couches diminue sensiblement en continu dans la direction de l'épaisseur de l'agencement en série,
dans lequel l'agencement est un assemblage de n couches de milieux filtrants asymétriques, qui sont empilées les unes sur les autres de manière lâche et qui sont incorporées dans les zones périphériques des couches dans un boîtier de filtre.

2. Agencement en série selon la revendication 1, dans lequel le milieu filtrant est une membrane microporeuse.

3. Agencement en série selon l'une des revendications précédentes, qui comporte 2 à 10, de préférence 2 ou 3 couches.

4. Agencement en série selon l'une des revendications précédentes, qui présente une épaisseur de 100 à 1000 $\mu$m, de préférence 150 à 600 $\mu$m.

5. Agencement en série selon l'une des revendications précédentes, dans lequel la taille de pores des n couches dans la direction de l'épaisseur diminue de manière linéaire, concave ou convexe.

6. Agencement en série selon l'une des revendications précédentes, dans lequel l'épaisseur des couches est, indépendamment les unes des autres, de 50 à 250 $\mu$m, de préférence de 100 à 200 $\mu$m.

7. Agencement en série selon l'une des revendications précédentes, dans lequel les couches sont construites à partir de PVDF, PTFE, ester de cellulose, hydrate de cellulose, polyamide, polysulfone, polyarylsulfone, acide polyacrylique, acide polyméthacrylique, copolymère d'acide acrylique - acide méthacrylique, polyéther-sulfone ou un mélange de ceux-ci, de préférence à partir de polyéther-sulfone.

8. Procédé de fabrication d'un agencement en série selon l'une des revendications 1 à 7,

   pour la fabrication de chacune des n couches, comprenant respectivement les étapes consistant à :

   (A) mettre à disposition une solution de coulage, contenant un polymère formant une membrane et un solvant
   (B) former un film par application d'une solution de coulage sur un support plan,
   (C) conditionner le film par introduction du film dans une atmosphère gazeuse qui contient un premier agent de précipitation, et
   (D) précipiter la couche par introduction du film conditionné dans un bain de précipitation qui contient un deuxième agent de précipitation,

   pour obtenir les n couches ; et
   (E) superposer les n couches.

9. Unité de filtration, comprenant un agencement en série selon l'une des revendications 1 à 7, dans laquelle l'unité de filtration est une cassette, un module de plaques, une bougie plissée ou une capsule.

10. Utilisation de l'agencement en série selon l'une des revendications 1 à 7 ou d'une unité de filtration selon la revendication 9 pour la filtration stérile, pour la filtration de virus et/ou pour la filtration de mycoplasmes.

## Figur 1

F 1-1
F 1-2
F 1-3
F 1-4

F 2-1
F 2-2
F 2-3
F 2-4

Filtrationsrichtung

## Figur 2

## Figur 3

Figur 4

A    B    C

Figur 5

A

B

C

D

E

F

# Figur 6

**Figur 7**

Caro/Ovomaltine Standzeit

2-lagiges Beispiel

Domnick Hunter

Millipore SHC

Pall ECV

3M Life Assure

508

341

282

179

132

1650043.7
1553743.16

STZ [kg/m2]

600  500  400  300  200  100  0

Life Assure (3M)

Pall ECV

Millipore SHC

Domnick Hunter HC

23

Figur 8

**Figur 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3701633 A1
- EP 1118377 B1
- US 7140496 B2
- US 5906742 A
- EP 2623187 A1
- US 8925737 B2
- US 2010320138 A1
- US 2002175124 A1
- US 2009061205 A1
- EP 0407800 A2
- EP 0345781 A2

**In der Beschreibung aufgeführte Nicht-Patentliteratur**

- **VERFAHREN.** *Journal of Membrane Science,* 2008, vol. 323, 241-246
- *Journal of Membrane Science,* 2011, vol. 372, 66-74
- *Journal of Membrane Science,* 2008, vol. 323, 241-246